# EUROPEAN PATENT SPECIFICATION

(11) **EP 3 412 881 B1**
(45) Date of publication and mention of the grant of the patent: **26.01.2022**
(21) Application number: 17746951.7
(22) Date of filing: 26.01.2017
(51) Int. Cl.: F01N 3/28, B01F 5/06, F01N 3/20

(54) **MIXING CAVITY ASSEMBLY**
MISCHKAVITÄTENANORDNUNG
ENSEMBLE CAVITÉ DE MÉLANGE

(30) Priority: 03.02.2016 CN 201610075594
(43) Date of publication of application: 12.12.2018
(73) Proprietor: Tenneco (Suzhou) Emission System Co., Ltd., Suzhou, Jiangsu 215300 (CN); Tenneco GmbH, Edenkoben, Rheinland-Pfalz 67480 (DE)
(72) Inventor: PRUS, Lukasz, Edenkoben Rheinland-Pfalz 67480 (DE); TWAROG, Szymon, Edenkoben Rheinland-Pfalz 67480 (DE); SI, Maxiang, Suzhou Jiangsu 215300 (CN); YU, Yang, Suzhou Jiangsu 215300 (CN); ZHAO, Zhiguo, Suzhou Jiangsu 215300 (CN); WANG, Cong, Suzhou Jiangsu 215300 (CN); HAN, Wenjun, Suzhou Jiangsu 215300 (CN); PENG, Yu, Suzhou Jiangsu 215300 (CN); SUN, Xiaogang, Suzhou Jiangsu 215300 (CN)
(74) Representative: STT Sozietät Thews & Thews
(86) International application number: PCT/CN2017/072718
(87) International publication number: WO 2017/133631

(56) References cited:
- CN-A- 101 835 962
- CN-A- 102 242 662
- CN-A- 102 840 018
- CN-A- 105 134 349
- CN-U- 201 687 556
- DE-A1-102007 012 790
- JP-A- 2008 309 000
- US-A1- 2010 083 643
- US-A1- 2013 074 483
- US-A1- 2014 109 557
- US-A1- 2014 298 781
- US-B1- 6 449 947

## Description

The present application claims the priority of Chinese Patent Application No. 201610075594.1, entitled "Mixing Chamber Assembly", filed on Feb. 3, 2016 in the SIPO (State Intellectual Property Office of the P.R.C.).

### Technical Field

The present application relates to a mixing chamber assembly which belongs to a technical field of an engine exhaust gas aftertreatment.

### Background

Research shows that ammonia uniformity in a pipeline of an exhaust aftertreatment system (such as Selective Catalytic Reduction system, SCR system) has important impact to the overall performance of system and endurance quality. Nonuniform ammonia (NH₃) can cause very low transformation efficiency of oxynitride (NOx). Pollution of ammonia leakage is easily caused if increasing urea injecting quantity in order to meet emission regulation. While urea droplets are easily deposited when they touched a wall having a relatively low temperature so as to form crystallization. If the crystallization becomes serious, it can block the exhaust pipe and cause engine power performance to decline. Uniformity improvement of mixing ammonia molecule can effectively improve urea utilization rate and reduce urea injecting quantity so as to reduce the risk of urea deposits.

Hence, it is necessary to provide a mixing chamber assembly which can improve ammonia uniformity in order to solve the above problems.

US 2014 109557 A1 shows a mixer comprising a first group and a second group of blades, the first group and the second group are of V-shaped position relationship, wherein the first group is inclined toward a left side wall and the second group is inclined toward a right side wall of the sub-compartment.

US 2013 074483 A1 shows a similar mixer comprising a first group and a second group of V-shaped position relationship.

US 2010 083643 A1 shoes a mixer plate comprising several mixed groups of blades of V-shaped position relationship.

US 2014 298781 A1 shows a mixer device comprising several mixed groups of blades of V-shaped position relationship.

### Summary of the Application

An object of the present application is to provide a mixing chamber assembly which can uniformly mix the engine exhaust gas with urea droplets.

In order to achieve the above object, the present application provides a mixing chamber assembly adapted for an engine aftertreatment system. The mixing chamber assembly includes a compartment and a mounting hole for mounting a urea injector. The compartment is partitioned to a first sub-compartment, a second sub-compartment and a middle sub-compartment connected between the first sub-compartment and the second sub-compartment. A second wall including a second left side wall and a second right side wall which at least partly defines the second sub-compartment, a third wall including a third left side wall and a third right side wall which at least partly defines the middle sub-compartment. The first sub-compartment is positioned upstream the second sub-compartment in a main flow direction of exhaust gas (MF). The urea injector is adapted for spraying urea droplets into the first sub-compartment. The mixing chamber assembly further includes a mixer positioned in the middle sub-compartment. The mixer includes a plurality of first blades arranged in a first row and inclined to the second sub-chamber. The first blades are divided into a first group and a second group, wherein the first blades of the first group and the first blades of the second group are of V-shaped position relationship in order to form double-swirl mixing effect in the second sub-compartment, wherein the first blades of the first group are inclined toward a second left side wall in the main flow direction of exhaust gas (MF) and the first blades of the second group are inclined toward a second right side wall of the sub-compartment in the main flow direction of exhaust gas (MF), wherein the first blades of the first group are positioned adjacent to a third left side wall opposite of the first blades of the second group which are positioned adjacent to a third right side wall.

The present application also provides a mixing chamber assembly adapted for an engine aftertreatment system. The mixing chamber assembly includes a compartment and a mounting hole for mounting a urea injector. The compartment is partitioned to a first sub-compartment, a second sub-compartment and a middle sub-compartment connected between the first sub-compartment and the second sub-compartment. A second wall including a second left side wall and a second right side wall, which at least partly defines the second sub-compartment, a third wall including a third left side wall and a third right side wall which at least partly defines the middle sub-compartment. The first sub-compartment is positioned upstream the second sub-compartment in a main flow direction of exhaust gas (MF). The urea injector is adapted for spraying urea droplets into the first sub-compartment. The mixing chamber assembly further includes a mixer positioned in the middle sub-compartment. The mixer includes a plurality of first blades arranged in a first row and inclined to the main flow direction of exhaust gas (MF) through the second sub-chamber. The first blades are divided into a first group and a second group, wherein the first blades of the first group and the first blades of the second group are of V-shaped position relationship in order to form double-swirl mixing effect in the second sub-compartment, wherein the first blades of the first group are inclined toward a second left side wall in the main flow direction of exhaust gas (MF) and the first blades of the second group are inclined toward a second right side wall of the sub-compartment in the main flow direction of exhaust gas (MF), wherein the first blades of the first group are positioned adjacent to a third left side wall opposite of the first blades of the second group which are positioned adjacent to a third right side wall.

As an improvement thereof, the first blades face at least partly in opposite directions.

As an improvement thereof, the mixer includes a plurality of second blades arranged in a second row and inclined to the first sub-chamber. The second blades are inclined to a same direction, and the second blades are positioned upstream the first blades.

As an improvement thereof, along the main flow direction (MF), configurations of the first blades are straight, or curved, or bended, or a combination thereof.

As an improvement thereof, the first blades include holes, or perforations, or flaps, or a combination thereof.

As an improvement thereof, a cross section of each first blade along a width direction thereof is straight, or curved, or bended, or a combination thereof.

As an improvement thereof, the mixing chamber assembly further includes a body portion and a cover for mating with the body portion. The body portion includes a side plate and a side wall extending from the side plate. The cover is fixed to the side wall. The first sub-compartment, the second sub-compartment and the middle sub-compartment are formed by the body portion and the cover.

As an improvement thereof, the cover defines a first opening in communication with the first sub-compartment and a second opening in communication with the second sub-compartment. The mounting hole is positioned at the side wall.

As an improvement thereof, the first blades of the first group and the first blades of the second group are of an angle being smaller than 90°.

As an improvement thereof, the side wall includes a first side wall which at least partly defines the first sub-compartment, the second side wall which at least partly defines the second sub-compartment and the third side wall which at least partly defines the middle sub-compartment, wherein
the first side wall includes a first left side wall and a first right side wall. The second side wall includes the second left side wall and the second right side wall. The third side wall includes the third left side wall and the third right side wall, and wherein
the second blades are inclined to the first right side wall or both to the first left side wall and to the first right side wall.

As an improvement thereof, the first blades of the first group are inclined to the main flow direction (MF). The first blades of the second group are inclined to the main flow direction (MF) and inner sides of the second left side wall and the second right side wall are curved.

As an improvement thereof, the first sub-compartment is offset from the second sub-compartment. The mixing chamber assembly includes an inclined portion between the first sub-compartment and the second sub-compartment along a thickness direction thereof in order to form a contracted space.

As an improvement thereof, the second blades are straight and slightly inclined to the cover in order to be uncompletely perpendicular to the side plate. The first blades of the second group are straight and slightly inclined to the cover in order to be uncompletely perpendicular to the side plate as well.

As an improvement thereof, the leftmost second blade includes a gas obstruction portion abutting against the third left wall, the rightmost second blade abuts against the third right wall.

As an improvement thereof, the first blades and the second blades are separated from each other along the main flow direction (MF) and form an empty there between. The mixer includes a bracket for fixing the first blades and the second blades. The bracket includes a plurality of inclined slots to receive the first blades and the second blades.

As an improvement thereof, the mixer is built by at least three parts.

As an improvement thereof, configurations of the first blades are straight, or curved, or bended, or a combination thereof.

As an improvement thereof, the first blades include holes, or perforations, or flaps, or a combination thereof.

As an improvement thereof, a cross section of each first blade along a width direction thereof is straight, or curved, or bended, or a combination thereof.

In comparison with prior art, with the first blades inclining to different directions, double-swirl mixing effect can be achieved. As a result, flow distance within limited space can be increased to assure sufficient mixing of the urea droplets and the exhaust gas. At the same time, the urea droplets can be sufficiently heated to improve urea evaporation rate, improve uniformity of ammonia molecule and reduce the risk of urea deposits.

### Brief Description of the Drawings

FIG. 1 is a perspective view of a mixing chamber assembly in accordance with an embodiment of the present application.
FIG. 2 is a partial exploded view of FIG. 1, wherein a cover is separated.
FIG. 3 is a further exploded view of FIG, 2, wherein a mixer is separated.
FIG. 4 is another perspective view of FIG. 1.
FIG. 5 is a front view of FIG. 1.
FIG. 6 is a front view of FIG. 4.
FIG. 7 is a perspective view of FIG. 1 with the cover removed.
FIG. 8 is a front view of FIG. 7.
FIG. 9 is a perspective view of the mixing chamber assembly with the cover removed, wherein position of a urea injector and double swirl direction of the engine exhaust gas and the urea droplets are marked.
FIG. 10 is a front view of FIG. 8 with a bracket removed therefrom.
FIG. 11 is a perspective view of the mixer shown in FIG. 7.
FIG. 12 is a front view of FIG. 11.
FIG. 13 is an exploded view of FIG. 11.
FIG. 14 is a schematic view of the first blades in accordance with a second embodiment of the present application.
FIG. 15 is a schematic view of the first blades in accordance with a third embodiment of the present application.
FIG. 16 is a schematic view of the first blades in accordance with a fourth embodiment of the present application.
FIG. 17 is a schematic view of the first blades in accordance with a fifth embodiment of the present application.

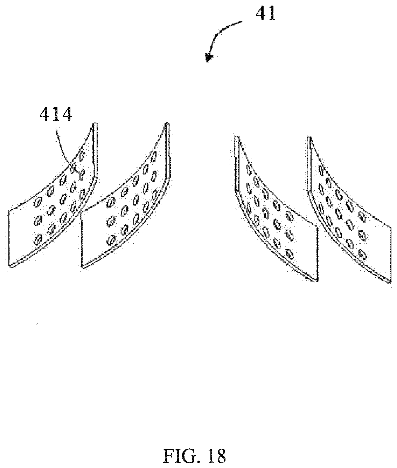

FIG. 18 is a schematic view of the first blades in accordance with a sixth embodiment of the present application.

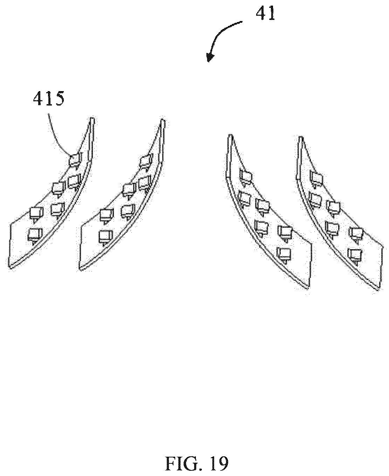

FIG. 19 is a schematic view of the first blades in accordance with a seventh embodiment of the present application.
FIG. 20 is a cross-sectional view along line B-B of FIG. 16, wherein the shape of the cross section is straight according to a first embodiment.
FIG. 21 is a cross-sectional view along line B-B of FIG. 16, wherein the shape of the cross section is curved according to a second embodiment.
FIG. 22 is a cross-sectional view along line B-B of FIG. 16, wherein the shape of the cross section is bended according to a third embodiment.
FIG. 23 is a cross-sectional view along line B-B of FIG. 16, wherein the shape of the cross section is bended in another manner according to a fourth embodiment.
FIG. 24 is a front view of FIG. 8 with the mixer removed therefrom, wherein the main flow direction of the exhaust gas is marked with arrow.

### Embodiments

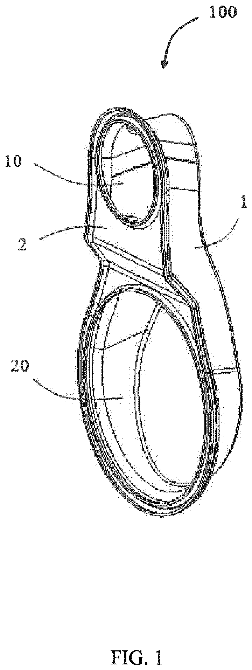

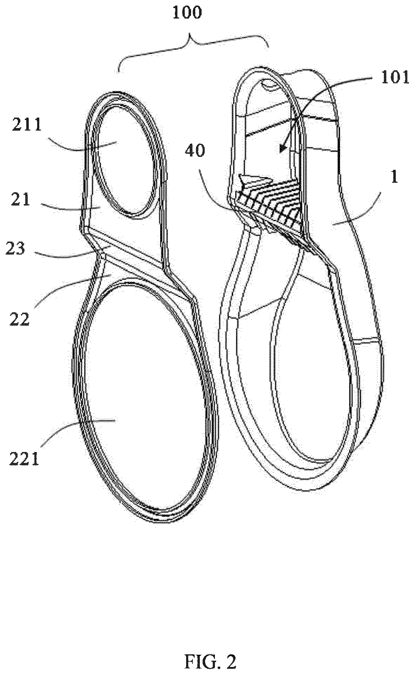

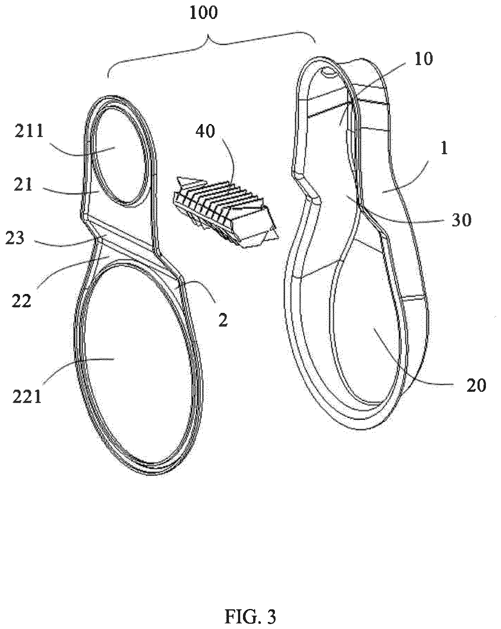

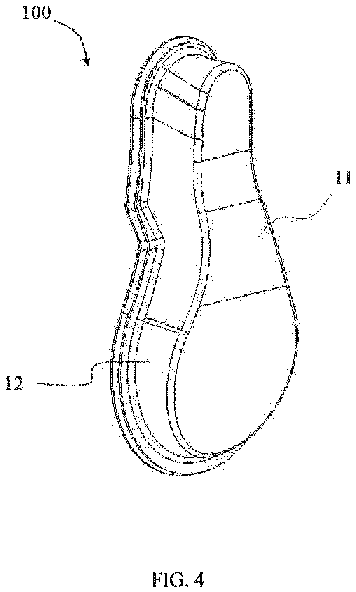

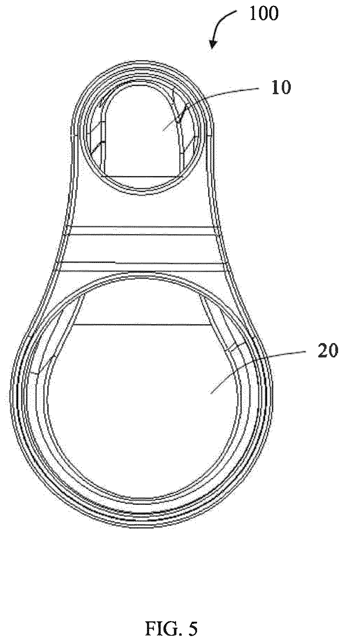

Referring to FIG. 1 to FIG. 10, the present application discloses a mixing chamber assembly 100 which is applied to an engine exhaust gas aftertreatment system for treating the engine exhaust gas. The exhaust gas aftertreatment system can include a Diesel Oxidation Catalyst (DOC) upstream the mixing chamber assembly 100 and/or a Selective Catalytic Reduction (SCR) and a Diesel Particulate Filter (DPF) downstream the mixing chamber assembly 100. Of course, in some embodiments, the SCR and DPF can be replaced by a SDPF which is a DPF coated by SCR catalyst. The shapes of the exhaust gas aftertreatment system can be straight, U-shaped, Z-shaped or L-shaped etc. Besides, it is understandable to those of ordinary skill in the art that the above DOC, DPF and SDPF can be replaced by other types of catalysts or combination according to actual requirement, which is omitted in description herein.

Referring to FIG. 1 to FIG. 8 and FIG. 24, the mixing chamber assembly 100 includes a compartment 101 and a mixer 40 positioned inside the compartment 101. According to different zones, the compartment 101 includes a first sub-compartment 10, a second sub-compartment 20 and a middle sub-compartment 30 connecting the first sub-compartment 10 and the second sub-compartment 20. In comparison with the second sub-compartment 20, the first sub-compartment 10 is positioned upstream a MF (Main Flow) direction of the exhaust gas. The mixer 40 is positioned inside the middle sub-compartment 30.

From the structure perspective, the mixing chamber assembly 100 of the present application includes a body portion 1 and a cover 2 for mating with the body portion 1. The body portion includes a side plate 11 and a side wall 12 extending from the side plate 11. The cover 2 is fixed to the side wall 12 through soldering for example. According to the illustrated embodiment of the present application, the first sub-compartment 10, the second sub-compartment 20 and the middle sub-compartment 30 are formed by the body portion 1 and the cover 2.

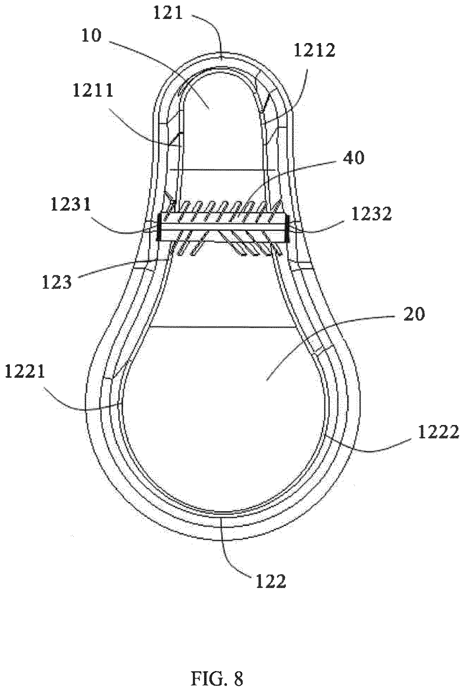

In detail, the side wall 12 includes a first side wall 121 which at least partly defines the first sub-compartment 10, a second wall 122 which at least partly defines the second sub-compartment 20 and a third wall 123 which at least partly defines the middle sub-compartment 30. The first side wall 121 includes a first left side wall 1211 and a first right side wall 1212. The second side wall 122 includes a second left side wall 1221 and a second right side wall 1222. The third side wall 123 includes a third left side wall 1231 and a third right side wall 1232. An inner side of the second left side wall 1221 and an inner side of the second right side wall 1222 are curved. In an illustrated embodiment of the present application, the first left side wall 1211 includes a mounting hole 1213 near its top for mounting the urea injector 3. Referring to FIG. 8, the mounting hole 1213 is located at top left of the mixing chamber assembly 100, meaning the mounting hole 1213 forms a certain angle with respect to a central plane of the mixing chamber assembly 100.

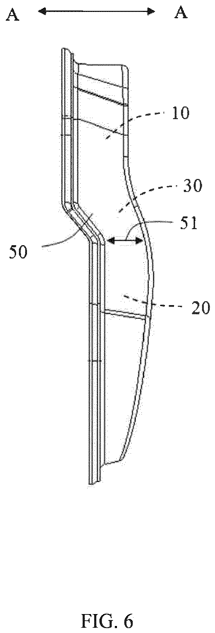

Referring to FIG. 6, the first sub-compartment 10 is offset from the second sub-compartment 20. The mixing chamber assembly 100 further includes an incline portion 50 between the first sub-compartment 10 and the second sub-compartment 20 along a thickness direction A-A thereof in order to form a contracted space 51.

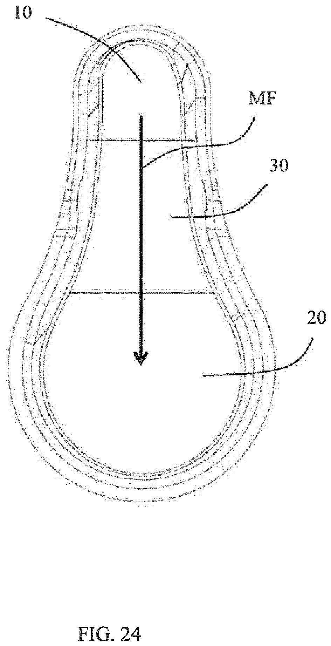

Referring to FIG. 1 to FIG. 3, the cover 2 includes a first plate portion 21, a second plate portion 22 and an inclined plan 23 connected the first plate portion 21 and the second plate portion 22. The inclined plan 23 is corresponding to the incline portion 50. Besides, the first plate portion 21 includes a first opening 211 in communication with the first sub-compartment 10. The second plate portion 22 includes a second opening 221 in communication with the second sub-compartment 20. According to the illustrated embodiment of the present application, the first opening 211 is an upstream exhaust gas inlet and the second opening 221 is a downstream exhaust gas outlet. In the present application, the compartment 101 refers to an enclosed volume formed maybe by one or more cover. The compartment 101 includes at least one entrance corresponding to the first opening 211 for the exhaust gas flowing into the compartment 101 and at least one exit corresponding to the second opening 221 for the exhaust gas leaving the compartment 101. The sub-compartment refers to a part of the compartment 101 in order to separate the compartment 101 into different functional parts. Of course, it does not necessary to require separation baffles in order to build the sub-compartment. Referring to FIG. 24, according to the illustrated embodiment of the present application, the sub-compartment includes the first sub-compartment 10, the second sub-compartment 20 and the middle sub-compartment 30.

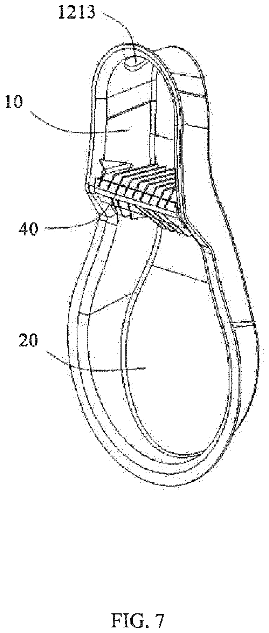

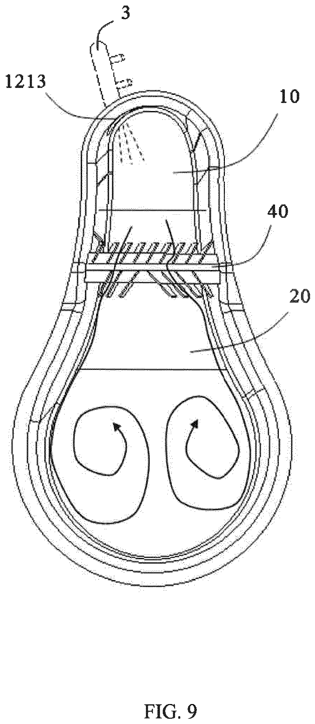

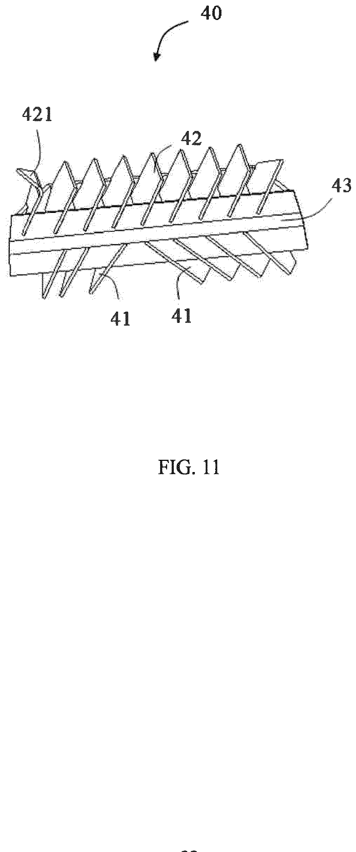

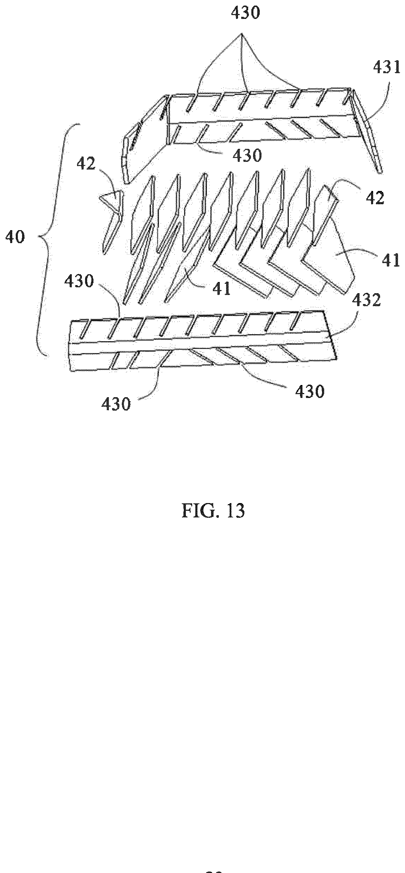

Referring to FIG. 7 to FIG. 13, the mixer 40 includes a plurality of first blades 41 which are arranged in a first row and inclined to the second sub-compartment 20. Referring to FIG. 9, the first blades 41 are separated into two groups of different inclined directions, among which the first blades in a first group 411 and the first blades in a second group 412 are of V-shaped position relationship in order to form double-swirl mixing effect in the second sub-compartment 20. Specifically, the first blades of the first group 411 are inclined toward the second left side wall 1221 and the first blades of the second group 412 are inclined toward the second right side wall 1222. As a result, viewed as a whole, the first blades in the first group 411 and the first blades in the second group 412 are of V-shaped position relationship. Besides, the first blades of the second group 412 are inclined to the cover 2 so that the first blades of the second group 412 are uncompletely perpendicular to the side plate 11. As a result, the exhaust gas located at the rear end can be introduced to the front in order to improve uniformity.

Referring to FIG. 8 and FIG. 24, it is understandable that the plurality of the first blades 41 are inclined to the MF direction of the exhaust gas in the second sub-compartment. As a result, viewed as a whole, the first blades in the first group 411 and the first blades in the second group 412 are of V-shaped position relationship in order to form double-swirl mixing effect in the second sub-compartment 20. As illustrated in the embodiment of the present application, the first blades 41 of the first group 411 and the first blades 41 of the second group 412 are of an angle being smaller than 90°.

According to the illustrated embodiment of the present application, in order to better break and heat the urea droplets, the mixer 40 further includes a plurality of second blades 42 arranged in a second row and inclined to the first sub-compartment 10. The second blades 42 are positioned upstream the first blades 41 along the MF direction of the exhaust gas. The second blades 42 are inclined to a same direction in order that the urea droplets sprayed to the second blades 42 can be heated in a dispersed manner. According to the illustrated embodiment of the present application, the plurality of the second blades 42 are inclined to the first right side wall 1212. The leftmost second blade 42 includes a gas obstruction portion 421 abutting against the third left wall 1231 in order to prevent too much exhaust gas from passing through a slit between the leftmost second blade 42 and the third left wall 1231. The rightmost second blade 42 abuts against the third right wall 1232 in order to prevent too much exhaust gas from passing through a slit between the rightmost second blade 42 and the third right wall 1232.

It is declarative that the description of the "same inclined direction" of the present application refers to incline to the same direction (for example as inclined to the top right corner as shown in FIG. 8). However, it does not mean the inclined angle needs to be completely the same. Preferably, according to the illustrated embodiment of the present application, the inclined angles of the second blades 42 are completely the same.

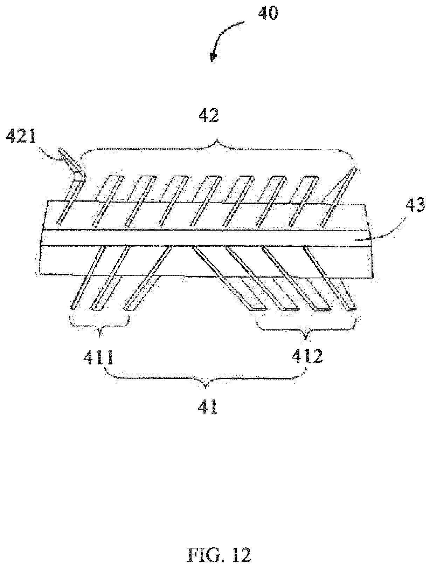

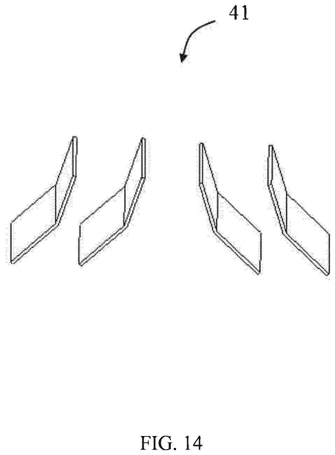

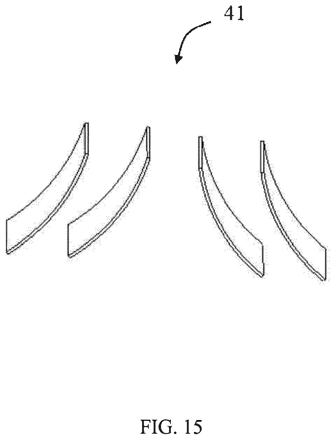

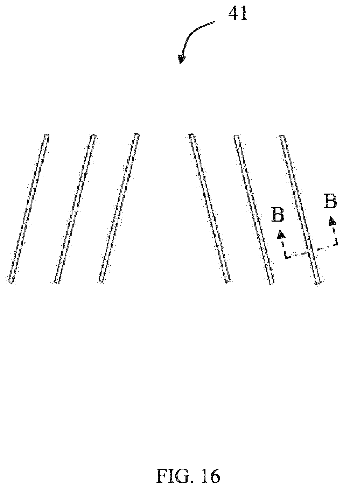

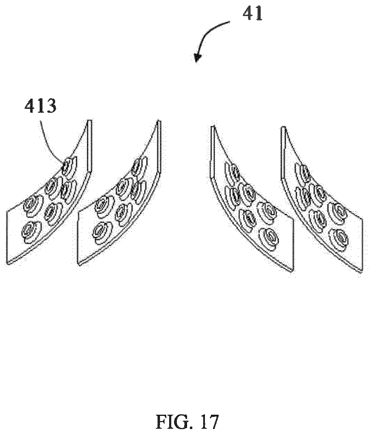

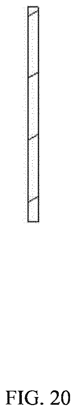

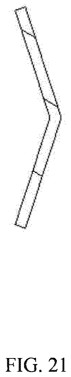

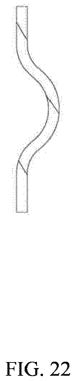

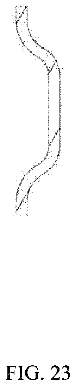

Besides, referring to FIG. 14 to FIG. 16, in other embodiments, according to different application conditions, configurations of the first blade 41 can be straight, or curved, or bended or a combination thereof. According to the present application, the description said "straight" means the structure of the first blade 41 itself is straight, no matter what arrangement angle it is. Referring to FIG. 17 to FIG. 16, in other embodiments, according to different application conditions, the first blade 41 can have holes, or perforations, or flaps or a combination thereof. Referring to FIG. 20 to FIG. 23, a cross section of the first blade 41 along a width direction B-B is straight, or curved, or bended, or a combination thereof. It is understandable to those of ordinary skill in the art that although the cross sections of FIG. 20 to FIG. 23 are based upon line B-B of FIG. 16, such shapes of the cross sections can be also applied to the first blade 41 in other embodiments, for example FIG. 12, FIG. 14, FIG. 15 or FIG.S 17 to 19, detailed description of which is omitted herein.

Besides, cause of the contracted space 51, exhaust gas will be accelerated at such position. Meanwhile, because the exhaust gas flows into the first sub-compartment 10 from the front side, when it is blocked by the side plate 11 and flow downwardly, exhaust gas at the rear of the first sub-compartment 10 will be much larger that at the front, which is not good for mixing. According to the illustrated embodiment of the present application, the second blades 42 are also inclined to the cover 2 so that the second blades 42 are uncompletely perpendicular to the side plate 11. Through inclining the first blades 41 and the second blades 42 to the cover 2, the exhaust gas located at the rear end can be introduced to the front in order to improve uniformity of the gas flow.

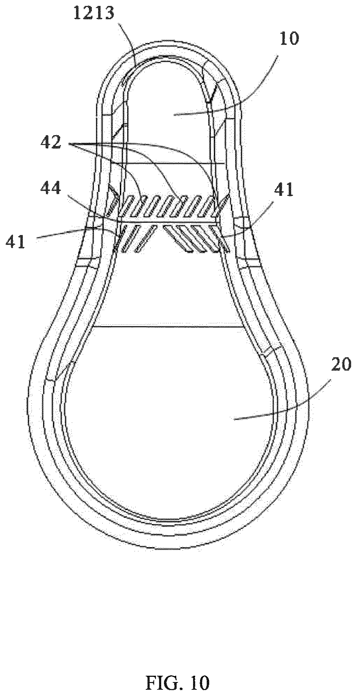

Referring to FIG. 10 and FIG. 24, the first blades 41 and the second blades 42 are separate from each other along the MF direction of the exhaust gas and form an empty 44 between the first blades 41 and the second blades 42 in order to improve the mixing uniformity of the exhaust gas and the urea droplets. In the illustrated embodiment of the present application, the mixer 40 includes at least three parts. The mixer 40 includes a bracket 43 for fixing the first blades 41 and the second blades 42. The bracket 43 includes a plurality of inclined slots 430 to receive the first blades 41 and the second blades 42. In the illustrated embodiment of the present application, the bracket 43 includes a U-shaped first bracket 431 and a second bracket 432 for mating with the first bracket 431. The inclined slots 430 are formed on top and bottom edges of the first bracket 431 and the second bracket 432, respectively.

In assembling, the first bracket 431 and the second bracket will be soldered together firstly. Then, the first blades 41 and the second blades 42 will be inserted into corresponding inclined slots 430 and fixed together. Then, the mixer 40 will be soldered to the third left side wall 1231 and the third right side wall 1232 for fixation.

In using, exhaust gas of the engine will enter the first sub-compartment 10 from the first opening 211 and the exhaust gas will flow downwardly as blocked by the side plate 11. When meeting the condition of urea injection, the urea injector 3 will inject urea droplets into the mixing chamber assembly 100. The exhaust gas of the engine and the urea droplets pass through the mixer 40 and flow laterally under the guidance of the first blades in the first group 411 and the first blades in the second group 412 so as to form the double-swirl mixing effect. As a result, flow distance within limited space can be increased to assure sufficient mixing of the urea droplets and the exhaust gas. At the same time, the urea droplets can be sufficiently heated to improve urea evaporation rate, improve uniformity of ammonia molecule and reduce the risk of urea deposits.

Terminologies used in the present application for representing spatial relative positions, for example "top", "bottom", "left", "right", "front", "rear" and "V-shaped" etc., are for easily describing the relationship about one feature of the drawings to another one. It is understandable that according to different laying angles of a product, the terminologies of the spatial relative positions can be referred to other positions different to what have been illustrated in the drawings, which should not be the limitation of the claims.

## Claims

1. A mixing chamber assembly (100) adapted for an engine aftertreatment system, the mixing chamber assembly (100) comprising a compartment (101) and a mounting hole (1213) for mounting a urea injector (3), the compartment (101) being partitioned to a first sub-compartment (10), a second sub-compartment (20) and a middle sub-compartment (30) connected between the first sub-compartment (10) and the second sub-compartment (20), a second wall (122) including a second left side wall (1221) and a second right side wall (1222), which at least partly defines the second sub-compartment (20), a third wall (123) including a third left side wall (1231) and a third right side wall (1232) which at least partly defines the middle sub-compartment (30), the first sub-compartment (10) being positioned upstream the second sub-compartment (20) in a main flow direction of exhaust gas (MF), the urea injector (3) being adapted for spraying urea droplets into the first sub-compartment (10), wherein the mixing chamber assembly (100) further comprises a mixer (40) positioned in the middle sub-compartment (30), the mixer (40) comprising a plurality of first blades (41) arranged in a first row and inclined to the second sub-chamber (20), the first blades (41) being divided into a first group (411) and a second group (412), **characterized in that**
the first blades (41) of the first group (411) and the first blades (41) of the second group (412) are of V-shaped position relationship in order to form double-swirl mixing effect in the second sub-compartment (20), wherein the first blades of the first group (411) are inclined toward the second left side wall (1221) in the main flow direction of exhaust gas (MF) and the first blades of the second group (412) are inclined toward the second right side wall (1222) in the main flow direction of exhaust gas (MF) of the sub-compartment (20) wherein the first blades of the first group (411) are positioned adjacent to the third left side wall (1231) opposite of the first blades of the second group (412) which are positioned adjacent to the third right side wall (1232).

2. A mixing chamber assembly (100) adapted for an engine aftertreatment system, the mixing chamber assembly (100) comprising a compartment (101) and a mounting hole (1213) for mounting a urea injector (3), the compartment (101) being partitioned to a first sub-compartment (10), a second sub-compartment (20) and a middle sub-compartment (30) connected between the first sub-compartment (10) and the second sub-compartment (20), a second wall (122) including a second left side wall (1221) and a second right side wall (1222), which at least partly defines the second sub-compartment (20), a third wall (123) including a third left side wall (1231) and a third right side wall (1232) which at least partly defines the middle sub-compartment (30), the first sub-compartment (10) being positioned upstream the second sub-compartment (20) in a main flow direction of exhaust gas (MF), the urea injector (3) being adapted for spraying urea droplets into the first sub-compartment (10), wherein the mixing chamber assembly (100) further comprises a mixer (40) positioned in the middle sub-compartment (30), the mixer (40) comprising a plurality of first blades (41) arranged in a first row and inclined to the main flow direction of exhaust gas (MF) through the second sub-chamber (20), the first blades (41) being divided into a first group (411) and a second group (412), **characterized in that**
the first blades (41) of the first group (411) and the first blades (41) of the second group (412) are of V-shaped position relationship in order to form double-swirl mixing effect in the second sub-compartment (20), wherein the first blades of the first group (411) are inclined toward the second left side wall (1221) in the main flow direction of exhaust gas (MF) and the first blades of the second group (412) are inclined toward the second right side wall (1222) in the main flow direction of exhaust gas (MF) of the sub-compartment (20), wherein the first blades of the first group (411) are positioned adjacent to the third left side wall (1231) opposite of the first blades of the second group (412) which are positioned adjacent to the third right side wall (1232).

3. The mixing chamber assembly (100) as claimed in claim 1 or 2, wherein the first blades face at least partly in opposite directions.

4. The mixing chamber assembly (100) as claimed in claim 1 or 2, wherein the mixer (40) comprises a plurality of second blades (42) arranged in a second row and inclined to the first sub-chamber (10), the second blades (42) being inclined to a same direction, and the second blades (42) being positioned upstream the first blades (41).

5. The mixing chamber assembly (100) as claimed in claim 2, wherein along the main flow direction (MF), configurations of the first blades (41) are straight, or curved, or bended, or a combination thereof.

6. The mixing chamber assembly (100) as claimed in claim 5, wherein the first blades (41) comprise holes, or perforations, or flaps, or a combination thereof.

7. The mixing chamber assembly (100) as claimed in claim 5, wherein a cross section of each first blade (41) along a width direction thereof is straight, or curved, or bended, or a combination thereof.

8. The mixing chamber assembly (100) as claimed in claim 4, further comprising a body portion (1) and a cover (2) for mating with the body portion (1), the body portion (1) comprising a side plate (11) and a side wall (12) extending from the side plate (11), the cover (2) being fixed to the side wall (12), the first sub-compartment (10), the second sub-compartment (20) and the middle sub-compartment (30) being formed by the body portion (1) and the cover (2).

9. The mixing chamber assembly (100) as claimed in claim 8, wherein the cover (2) defines a first opening (211) in communication with the first sub-compartment (10) and a second opening (221) in communication with the second sub-compartment (20), the mounting hole (1213) being positioned at the side wall (12).

10. The mixing chamber assembly (100) as claimed in claim 1 or 2, wherein the first blades (41) of the first group (411) and the first blades (41) of the second group (412) are of an angle being smaller than 90°.

11. The mixing chamber assembly (100) as claimed in claim 9, wherein the side wall (12) comprises a first side wall (121) which at least partly defines the first sub-compartment (10), the second side wall (122) which at least partly defines the second sub-compartment (20) and the third side wall (123) which at least partly defines the middle sub-compartment (30), wherein
the first side wall (121) comprises a first left side wall (1211) and a first right side wall (1212), the second side wall (122) comprises the second left side wall (1221) and the second right side wall (1222), the third side wall (123) comprises the third left side wall (1231) and the third right side wall (1232), and wherein
the second blades (42) are inclined to the first right side wall (1212) or both to the first left side wall (1211) and to the first right side wall (1212).

12. The mixing chamber assembly (100) as claimed in claim 11, wherein the first blades (41) of the first group (411) are inclined to the main flow direction (MF), the first blades (41) of the second group (412) are inclined to the main flow direction (MF) and inner sides of the second left side wall (1221) and the second right side wall (1222) are curved.

13. The mixing chamber assembly (100) as claimed in claim 11 or 12, wherein the first sub-compartment (10) is offset from the second sub-compartment (20), the mixing chamber assembly (100) comprising an inclined portion (50) between the first sub-compartment (10) and the second sub-compartment (20) along a thickness direction (A-A) thereof in order to form a contracted space (51).

14. The mixing chamber assembly (100) as claimed in claim 12 or 13, wherein the second blades (42) are straight and slightly inclined to the cover (2) in order to be uncompletely perpendicular to the side plate (11), the first blades (41) of the second group (412) are straight and slightly inclined to the cover (2) in order to be uncompletely perpendicular to the side plate (11) as well.

15. The mixing chamber assembly (100) as claimed in claim 11, wherein the leftmost second blade (42) comprises a gas obstruction portion (421) abutting against the third left wall (1231), the rightmost second blade (42) abuts against the third right wall (1232).

16. The mixing chamber assembly (100) as claimed in claim 4, wherein the first blades (41) and the second blades (42) are separated from each other along the main flow direction (MF) and form an empty (44) there between, the mixer (40) comprising a bracket (43) for fixing the first blades (41) and the second blades (42), the bracket (43) comprising a plurality of inclined slots (430) to receive the first blades (41) and the second blades (42).

17. The mixing chamber assembly (100) as claimed in any preceding claims wherein the mixer (40) is built by at least three parts.

18. The mixing chamber assembly (100) as claimed in claim 1, wherein configurations of the first blades (41) are straight, or curved, or bended, or a combination thereof.

19. The mixing chamber assembly (100) as claimed in claim 18, wherein the first blades (41) comprise holes, or perforations, or flaps, or a combination thereof.

20. The mixing chamber assembly (100) as claimed in claim 18, wherein a cross section of each first blade (41) along a width direction thereof is straight, or curved, or bended, or a combination thereof.

## Patentansprüche

1. Mischkammeranordnung (100), die für ein Nachbehandlungssystem eines Motors ausgelegt ist, wobei die Mischkammeranordnung (100) umfasst: einen Raum (101) und ein Montageloch (1213) zur Montage einer Harnstoffeinspritzdüse (3), wobei der Raum (101) in einen ersten Teilraum (10), einen zweiten Teilraum (20) und einen mittleren Teilraum (30), der zwischen dem ersten Teilraum (10) und dem zweiten Teilraum (20) eingebunden ist, unterteilt ist, eine zweite Wand (122), die eine zweite linke Seitenwand (1221) und eine zweite rechte Seitenwand (1222) aufweist und wenigstens teilweise den zweiten Teilraum (20) definiert, eine dritte Wand (123), die eine dritte linke Seitenwand (1231) und eine dritte rechte Seitenwand (1232) aufweist und wenigstens teilweise den mittleren Teilraum (30) definiert, wobei der erste Teilraum (10) in einer Hauptströmungsrichtung von Abgas (MF) dem zweiten Teilraum (20) vorgeschaltet angeordnet ist, wobei die Harnstoffeinspritzdüse (3) zum Sprühen von Harnstofftröpfchen in den ersten Teilraum (10) ausgelegt ist, wobei die Mischkammeranordnung (100) ferner einen Mischer (40) umfasst, der in dem mittleren Teilraum (30) angeordnet ist, wobei der Mischer (40) eine Mehrzahl erster Flügel (41) umfasst, die in einer ersten Reihe angeordnet und zu der zweiten Teilkammer (20) hin geneigt sind, wobei die ersten Flügel (41) in eine erste Gruppe (411) und eine zweite Gruppe (412) geteilt sind, **dadurch gekennzeichnet, dass**
die ersten Flügel (41) der ersten Gruppe (411) und die ersten Flügel (41) der zweiten Gruppe (412) eine V-förmige Beziehung ihrer Positionen aufweisen, um in dem zweiten Teilraum (20) einen Doppelwirbel-Mischeffekt auszubilden, wobei die ersten Flügel der ersten Gruppe (411) in der Hauptströmungsrichtung von Abgas (MF) hin zu der zweiten linken Seitenwand (1221) geneigt sind und die ersten Flügel der zweiten Gruppe (412) in der Hauptströmungsrichtung von Abgas (MF) des Teilraums (20) hin zu der zweiten rechten Seitenwand (1222) geneigt sind, wobei die ersten Flügel der ersten Gruppe (411) der dritten linken Seitenwand (1231) benachbart, gegenüber den ersten Flügeln der zweiten Gruppe (412), die der dritten rechten Seitenwand (1232) benachbart angeordnet sind, angeordnet sind.

2. Mischkammeranordnung (100), die für ein Nachbehandlungssystem eines Motors ausgelegt ist, wobei die Mischkammeranordnung (100) umfasst: einen Raum (101) und ein Montageloch (1213) zur Montage einer Harnstoffeinspritzdüse (3), wobei der Raum (101) in einen ersten Teilraum (10), einen zweiten Teilraum (20) und einen mittleren Teilraum (30), der zwischen dem ersten Teilraum (10) und dem zweiten Teilraum (20) eingebunden ist, unterteilt ist, eine zweite Wand (122), die eine zweite linke Seitenwand (1221) und eine zweite rechte Seitenwand (1222) aufweist und wenigstens teilweise den zweiten Teilraum (20) definiert, eine dritte Wand (123), die eine dritte linke Seitenwand (1231) und eine dritte rechte Seitenwand (1232) aufweist und wenigstens teilweise den mittleren Teilraum (30) definiert, wobei der erste Teilraum (10) in einer Hauptströmungsrichtung von Abgas (MF) dem zweiten Teilraum (20) vorgeschaltet angeordnet ist, wobei die Harnstoffeinspritzdüse (3) zum Sprühen von Harnstofftröpfchen in den ersten Teilraum (10) ausgelegt ist, wobei die Mischkammeranordnung (100) ferner einen Mischer (40) umfasst, der in dem mittleren Teilraum (30) angeordnet ist, wobei der Mischer (40) eine Mehrzahl erster Flügel (41) umfasst, die in einer ersten Reihe angeordnet und zu der Hauptströmungsrichtung von Abgas (MF) durch die zweite Teilkammer (20) hin geneigt sind, wobei die ersten Flügel (41) in eine erste Gruppe (411) und eine zweite Gruppe (412) geteilt sind, **dadurch gekennzeichnet, dass**
die ersten Flügel (41) der ersten Gruppe (411) und die ersten Flügel (41) der zweiten Gruppe (412) eine V-förmige Beziehung ihrer Positionen aufweisen, um in dem zweiten Teilraum (20) einen Doppelwirbel-Mischeffekt auszubilden, wobei die ersten Flügel der ersten Gruppe (411) in der Hauptströmungsrichtung von Abgas (MF) hin zu der zweiten linken Seitenwand (1221) geneigt sind und die ersten Flügel der zweiten Gruppe (412) in der Hauptströmungsrichtung von Abgas (MF) des Teilraums (20) hin zu der zweiten rechten Seitenwand (1222) geneigt sind, wobei die ersten Flügel der ersten Gruppe (411) der dritten linken Seitenwand (1231) benachbart, gegenüber den ersten Flügeln der zweiten Gruppe (412), die der dritten rechten Seitenwand (1232) benachbart angeordnet sind, angeordnet sind.

3. Mischkammeranordnung (100) nach Anspruch 1 oder 2, wobei die ersten Flügel wenigstens teilweise in entgegengesetzte Richtungen weisen.

4. Mischkammeranordnung (100) nach Anspruch 1 oder 2, wobei der Mischer (40) eine Mehrzahl zweiter Flügel (42) umfasst, die in einer zweiten Reihe angeordnet und zu der ersten Teilkammer (10) hin geneigt sind, wobei die zweiten Flügel (42) in eine gleiche Richtung geneigt sind und die zweiten Flügel (42) den ersten Flügeln (41) vorgeschaltet angeordnet sind.

5. Mischkammeranordnung (100) nach Anspruch 2, wobei Ausgestaltungen der ersten Flügel (41) entlang der Hauptströmungsrichtung (MF) gerade oder gekrümmt, oder gebogen, oder eine Kombination daraus sind.

6. Mischkammeranordnung (100) nach Anspruch 5, wobei die ersten Flügel (41) Löcher, oder Durchbrüche, oder Klappen oder eine Kombination daraus umfassen.

7. Mischkammeranordnung (100) nach Anspruch 5, wobei ein Querschnitt jedes ersten Flügels (41) entlang einer Breitenrichtung davon gerade oder gekrümmt, oder gebogen, oder eine Kombination daraus ist.

8. Mischkammeranordnung (100) nach Anspruch 4, die ferner einen Körperabschnitt (1) und eine Abdeckung (2) zum Zusammenpassen mit dem Körperabschnitt (1) umfasst, wobei der Körperabschnitt (1) eine Seitenplatte (11) und eine Seitenwand (12), die sich von der Seitenplatte (11) aus erstreckt, umfasst, wobei die Abdeckung (2) an der Seitenwand (12) befestigt ist, wobei der erste Teilraum (10), der zweite Teilraum (20) und der mittlere Teilraum (30) durch den Körperabschnitt (1) und die Abdeckung (2) ausgebildet werden.

9. Mischkammeranordnung (100) nach Anspruch 8, wobei die Abdeckung (2) eine erste Öffnung (211), die mit dem ersten Teilraum (10) in Verbindung steht, und eine zweite Öffnung (221), die mit dem zweiten Teilraum (20) in Verbindung steht, definiert, wobei das Montageloch (1213) an der Seitenwand (12) angeordnet ist.

10. Mischkammeranordnung (100) nach Anspruch 1 oder 2, wobei die ersten Flügel (41) der ersten Gruppe (411) und die ersten Flügel (41) der zweiten Gruppe (412) einen Winkel aufweisen, der kleiner als 90° ist.

11. Mischkammeranordnung (100) nach Anspruch 9, wobei die Seitenwand (12) eine erste Seitenwand (121), die wenigstens teilweise den ersten Teilraum (10) definiert, die zweite Seitenwand (122), die wenigstens teilweise den zweiten Teilraum (20) definiert, und die dritte Seitenwand (123), die wenigstens teilweise den mittleren Teilraum (30) definiert, umfasst, wobei
die erste Seitenwand (121) eine erste linke Seitenwand (1211) und eine erste rechte Seitenwand (1212) umfasst, die zweite Seitenwand (122) die zweite linke Seitenwand (1221) und die zweite rechte Seitenwand (1222) umfasst, die dritte Seitenwand (123) die dritte linke Seitenwand (1231) und die dritte rechte Seitenwand (1232) umfasst und wobei
die zweiten Flügel (42) zu der ersten rechten Seitenwand (1212) hin oder sowohl zu der ersten linken Seitenwand (1211) als auch zu der ersten rechten Seitenwand (1212) hin geneigt sind.

12. Mischkammeranordnung (100) nach Anspruch 11, wobei die ersten Flügel (41) der ersten Gruppe (411) zu der Hauptströmungsrichtung (MF) hin geneigt sind, die ersten Flügel (41) der zweiten Gruppe (412) zu der Hauptströmungsrichtung (MF) hin geneigt sind und Innenseiten der zweiten linken Seitenwand (1221) und der zweiten rechten Seitenwand (1222) gekrümmt sind.

13. Mischkammeranordnung (100) nach Anspruch 11 oder 12, wobei der erste Teilraum (10) gegenüber dem zweiten Teilraum (20) versetzt ist, wobei die Mischkammeranordnung (100) zwischen dem ersten Teilraum (10) und dem zweiten Teilraum (20) entlang einer Dickenrichtung (A-A) davon einen geneigten Abschnitt (50) umfasst, um einen verengten Raum (51) auszubilden.

14. Mischkammeranordnung (100) nach Anspruch 12 oder 13, wobei die zweiten Flügel (42) gerade und leicht zu der Abdeckung (2) hin geneigt sind, um nicht ganz senkrecht zu der Seitenplatte (11) zu sein und die ersten Flügel (41) der zweiten Gruppe (412) gerade und leicht zu der Abdeckung (2) hin geneigt sind, um ebenfalls nicht ganz senkrecht zu der Seitenplatte (11) zu sein.

15. Mischkammeranordnung (100) nach Anspruch 11, wobei der äußerste linke zweite Flügel (42) einen Gasabsperrabschnitt (421) umfasst, der an der dritten linken Wand (1231) anliegt und der äußerste rechte zweite Flügel (42) an der dritten rechten Wand (1232) anliegt.

16. Mischkammeranordnung (100) nach Anspruch 4, wobei die ersten Flügel (41) und die zweiten Flügel (42) entlang der Hauptströmungsrichtung (MF) voneinander getrennt sind und zwischen sich einen Leerraum (44) ausbilden, wobei der Mischer (40) eine Halterung (43) zum Befestigen der ersten Flügel (41) und der zweiten Flügel (42) umfasst, wobei die Halterung (43) eine Mehrzahl geneigter Schlitze (430) zum Aufnehmen der ersten Flügel (41) und der zweiten Flügel (42) umfasst.

17. Mischkammeranordnung (100) nach einem der vorangehenden Ansprüche, wobei der Mischer (40) aus wenigstens drei Teilen aufgebaut ist.

18. Mischkammeranordnung (100) nach Anspruch 1, wobei Ausgestaltungen der ersten Flügel (41) gerade oder gekrümmt, oder gebogen, oder eine Kombination daraus sind.

19. Mischkammeranordnung (100) nach Anspruch 18, wobei die ersten Flügel (41) Löcher, oder Durchbrüche, oder Klappen oder eine Kombination daraus umfassen.

20. Mischkammeranordnung (100) nach Anspruch 18, wobei ein Querschnitt jedes ersten Flügels (41) entlang einer Breitenrichtung davon gerade oder gekrümmt, oder gebogen, oder eine Kombination daraus ist.

## Revendications

1. Ensemble de chambre de mélange (100) conçu pour un système de post-traitement de moteur, l'ensemble de chambre de mélange (100) comprenant un compartiment (101) et un orifice de montage (1213) pour monter un injecteur d'urée (3), le compartiment (101) étant divisé en un premier sous-compartiment (10), un deuxième sous-compartiment (20) et un sous-compartiment intermédiaire (30) raccordé entre le premier sous-compartiment (10) et le deuxième sous-compartiment (20), une deuxième paroi (122) ayant une deuxième paroi latérale gauche (1221) et une deuxième paroi latérale droite (1222), laquelle définit au moins partiellement le deuxième sous-compartiment (20), une troisième paroi (123) ayant une troisième paroi latérale gauche (1231) et une troisième paroi latérale droite (1232), laquelle définit au moins partiellement le sous-compartiment intermédiaire (30), le premier sous-compartiment (10) étant positionné en amont du deuxième sous-compartiment (20) dans une direction d'écoulement principale du gaz d'échappement (MF), l'injecteur d'urée (3) étant conçu pour pulvériser des gouttes d'urée dans le premier sous-compartiment (10), l'ensemble de chambre de mélange (100) comprenant en outre un mélangeur (40) positionné dans le sous-compartiment intermédiaire (30), le mélangeur (40) comprenant une pluralité de premières lames (41) disposées sur une première rangée et inclinées vers la deuxième sous-chambre (20), les premières lames (41) étant divisées en un premier groupe (411) et un deuxième groupe (412), **caractérisé en ce que**
les premières lames (41) du premier groupe (411) et les premières lames (41) du deuxième groupe (412) sont dans un rapport de position en forme de V afin de former un effet de mélange à double turbulence dans le deuxième sous-compartiment (20), les premières lames du premier groupe (411) étant inclinées vers la deuxième paroi latérale gauche (1221) dans la direction d'écoulement principale du gaz d'échappement (MF) et les premières lames du deuxième groupe (412) étant inclinées vers la deuxième paroi latérale droite (1222) dans la direction d'écoulement principale du gaz d'échappement (MF) du sous-compartiment (20), les premières lames du premier groupe (411) étant positionnées de façon adjacente à la troisième paroi latérale gauche (1231) opposées aux premières lames du deuxième groupe (412) qui sont positionnées de façon adjacente à la troisième paroi latérale droite (1232).

2. Ensemble de chambre de mélange (100) conçu pour un système de post-traitement de moteur, l'ensemble de chambre de mélange (100) comprenant un compartiment (101) et un orifice de montage (1213) pour monter un injecteur d'urée (3), le compartiment (101) étant divisé en un premier sous-compartiment (10), un deuxième sous-compartiment (20) et un sous-compartiment intermédiaire (30) raccordé entre le premier sous-compartiment (10) et le deuxième sous-compartiment (20), une deuxième paroi (122) ayant une deuxième paroi latérale gauche (1221) et une deuxième paroi latérale droite (1222), laquelle définit au moins partiellement le deuxième sous-compartiment (20), une troisième paroi (123) ayant une troisième paroi latérale gauche (1231) et une troisième paroi latérale droite (1232), laquelle définit au moins partiellement le sous-compartiment intermédiaire (30), le premier sous-compartiment (10) étant positionné en amont du deuxième sous-compartiment (20) dans une direction d'écoulement principale du gaz d'échappement (MF), l'injecteur d'urée (3) étant conçu pour pulvériser des gouttes d'urée dans le premier sous-compartiment (10), l'ensemble de chambre de mélange (100) comprenant en outre un mélangeur (40) positionné dans le sous-compartiment intermédiaire (30), le mélangeur (40) comprenant une pluralité de premières lames (41) disposées sur une première rangée et inclinées dans la direction d'écoulement principale du gaz d'échappement (MF) par la deuxième sous-chambre (20), les premières lames (41) étant divisées en un premier groupe (411) et un deuxième groupe (412), **caractérisé en ce que**
les premières lames (41) du premier groupe (411) et les premières lames (41) du deuxième groupe (412) sont dans un rapport de position en forme de V afin de former un effet de mélange à double turbulence dans le deuxième sous-compartiment (20), les premières lames du premier groupe (411) étant inclinées vers la deuxième paroi latérale gauche (1221) dans la direction d'écoulement principale du gaz d'échappement (MF) et les premières lames du deuxième groupe (412) étant inclinées vers la deuxième paroi latérale droite (1222) dans la direction d'écoulement principale du gaz d'échappement (MF) du sous-compartiment (20), les premières lames du premier groupe (411) étant positionnées de façon adjacente à la troisième paroi latérale gauche (1231) opposées aux premières lames du deuxième groupe (412) qui sont positionnées de façon adjacente à la troisième paroi latérale droite (1232).

3. Ensemble de chambre de mélange (100) selon la revendication 1 ou 2, les premières lames étant orientées au moins partiellement dans des directions opposées.

4. Ensemble de chambre de mélange (100) selon la revendication 1 ou 2, le mélangeur (40) comprenant une pluralité de deuxièmes lames (42) disposées sur une deuxième rangée et inclinées vers la première sous-chambre (10), les deuxièmes lames (42) étant inclinées dans une même direction, et les deuxièmes lames (42) étant positionnées en amont des premières lames (41).

5. Ensemble de chambre de mélange (100) selon la revendication 2, des configurations des premières lames (41) étant droites ou recourbées ou coudées, ou une combinaison de ces configurations, dans la direction d'écoulement principale (MF).

6. Ensemble de chambre de mélange (100) selon la revendication 5, les premières lames (41) comprenant des orifices ou des perforations ou des volets, ou une combinaison de ces éléments.

7. Ensemble de chambre de mélange (100) selon la revendication 5, une section transversale de chaque première lame (41) dans une direction de la largeur étant droite ou recourbée ou coudée, ou une combinaison de ces configurations.

8. Ensemble de chambre de mélange (100) selon la revendication 4, comprenant en outre une partie de corps (1) et une protection (2) pour correspondre à la partie de corps (1), la partie de corps (1) comprenant une plaque latérale (11) et une paroi latérale (12) s'étendant à partir de la plaque latérale (11), la protection (2) étant fixée à la paroi latérale (12), le premier sous-compartiment (10), le deuxième sous-compartiment (20) et le sous-compartiment intermédiaire (30) étant formés par la partie de corps (1) et la protection (2).

9. Ensemble de chambre de mélange (100) selon la revendication 8, la protection (2) définissant une première ouverture (211) en communication avec le premier sous-compartiment (10) et une deuxième ouverture (221) en communication avec le deuxième sous-compartiment (20), l'orifice de montage (1213) étant positionné sur la paroi latérale (12).

10. Ensemble de chambre de mélange (100) selon la revendication 1 ou 2, les premières lames (41) du premier groupe (411) et les premières lames (41) du deuxième groupe (412) formant un angle inférieur à 90°.

11. Ensemble de chambre de mélange (100) selon la revendication 9, la paroi latérale (12) comprenant une première paroi latérale (121), laquelle définit au moins partiellement le premier sous-compartiment (10), la deuxième paroi latérale (122), laquelle définit au moins partiellement le deuxième sous-compartiment (20) et la troisième paroi latérale (123), laquelle définit au moins partiellement le sous-compartiment intermédiaire (30),
la première paroi latérale (121) comprenant une première paroi latérale gauche (1211) et une première paroi latérale droite (1212), la deuxième paroi latérale (122) comprenant la deuxième paroi latérale gauche (1221) et la deuxième paroi latérale droite (1222), la troisième paroi latérale (123) comprenant la troisième paroi latérale gauche (1231) et la troisième paroi latérale droite (1232), et
les deuxièmes lames (42) étant inclinées vers la première paroi latérale droite (1212) ou à la fois vers la première paroi latérale gauche (1211) et vers la première paroi latérale droite (1212).

12. Ensemble de chambre de mélange (100) selon la revendication 11, les premières lames (41) du premier groupe (411) étant inclinées dans la direction d'écoulement principale (MF), les premières lames (41) du deuxième groupe (412) étant inclinées dans la direction d'écoulement principale (MF) et des côtés intérieurs de la deuxième paroi latérale gauche (1221) et de la deuxième paroi latérale droite (1222) étant courbes.

13. Ensemble de chambre de mélange (100) selon la revendication 11 ou 12, le premier sous-compartiment (10) étant décalé par rapport au deuxième sous-compartiment (20), l'ensemble de chambre de mélange (100) comprenant une partie inclinée (50) entre le premier sous-compartiment (10) et le deuxième sous-compartiment (20) dans une direction d'épaisseur (A-A) de celui-ci afin de former un espace contracté (51).

14. Ensemble de chambre de mélange (100) selon la revendication 12 ou 13, les deuxièmes lames (42) étant droites et légèrement inclinées vers la protection (2) afin d'être incomplètement perpendiculaires à la plaque latérale (11), les premières lames (41) du deuxième groupe (412) étant droites et légèrement inclinées vers la protection (2) afin d'être aussi incomplètement perpendiculaires à la plaque latérale (11).

15. Ensemble de chambre de mélange (100) selon la revendication 11, la deuxième lame la plus à gauche (42) comprenant une partie d'obstruction de gaz (421) en appui contre la troisième paroi gauche (1231), la deuxième lame la plus à droite (42) étant en appui contre la troisième paroi droite (1232).

16. Ensemble de chambre de mélange (100) selon la revendication 4, les premières lames (41) et les deuxièmes lames (42) étant séparées les unes des autres dans la direction d'écoulement principale (MF) et formant un vide (44) entre elles, le mélangeur (40) comprenant un support (43) pour fixer les premières lames (41) et les deuxièmes lames (42), le support (43) comprenant une pluralité de fentes inclinées (430) pour accueillir les premières lames (41) et les deuxièmes lames (42).

17. Ensemble de chambre de mélange (100) selon l'une quelconque des revendications précédentes, le mélangeur (40) étant constitué d'au moins trois parties.

18. Ensemble de chambre de mélange (100) selon la revendication 1, des configurations des premières lames (41) étant droites ou recourbées ou coudées, ou une combinaison de ces configurations.

19. Ensemble de chambre de mélange (100) selon la revendication 18, les premières lames (41) comprenant des orifices ou des perforations ou des volets, ou une combinaison de ces éléments.

20. Ensemble de chambre de mélange (100) selon la revendication 18, une section transversale de chaque première lame (41) dans une direction de la largeur étant droite ou recourbée ou coudée, ou une combinaison de ces configurations.
